(19) Europäisches Patentamt
European Patent Office
Office européen des brevets

(11) Numéro de publication: **0 475 516 A1**

(12) **DEMANDE DE BREVET EUROPEEN**

(21) Numéro de dépôt: **91202261.3**

(22) Date de dépôt: **05.09.91**

(51) Int. Cl.$^5$: **C08G 2/38**, C08G 4/00, C08G 77/46

(30) Priorité: **12.09.90 BE 9000872**

(43) Date de publication de la demande: **18.03.92 Bulletin 92/12**

(84) Etats contractants désignés: **BE DE FR GB IT NL**

(71) Demandeur: **SOLVAY**
**Rue du Prince Albert, 33**
**B-1050 Bruxelles(BE)**

(72) Inventeur: **Goethals, Eric**
**Huis Gaverstraat, 52**
**B-9750 Ouwegem-Zingem(BE)**

(74) Mandataire: **Husemann, Claude et al**
**SOLVAY Département de la Propriété Industrielle 310, Rue de Ransbeek**
**B-1120 Bruxelles(BE)**

(54) **Copolymères à blocs constitués notamment de polyoxyméthylène et de polyoxyéthylène et procédé pour leur obtention.**

(57) L'invention concerne la synthèse de copolymères à blocs constitués de blocs de poly(oxyméthylène-Co-oxyéthylène) et des blocs d'un terconstituant, ayant des propriétés de résistance à la chaleur, aux chocs et compatibles avec d'autres polymères tels que les élastomères.

EP 0 475 516 A1

La présente invention se rapporte à une nouvelle famille de copolymères à blocs comprenant notamment des blocs de poly(oxyméthylène) et des blocs de poly(oxyméthylène-Co-oxyéthylène) ainsi que des blocs d'unités d'un terconstituant. L'invention se rapporte également à un procédé permettant d'obtenir de tels copolymères à blocs.

Il est connu depuis longtemps que l'on peut obtenir des poly(oxymèthylène) (homopolymères) ou des copolymères poly(oxyméthylène-Co-oxyéthylène) de différents types, statistiques ou autres, par homopolymérisation de formaldéhyde ou de trioxane, ou par copolymérisation de ces composés avec de l'oxyde d'éthylène.

A ce jour on n'a toutefois pas réussi à obtenir des polymères de ce type qui sont stables à la chaleur, résistants aux chocs et/ou compatibles avec d'autres polymères élastomères.

Les copolymères à blocs de l'invention ne possèdent plus ces inconvénients et possèdent des propriétés de résistance à la chaleur, de résistance aux chocs et de compatibilité avec d'autres polymères élastomériques, qui peuvent être préétablis en fonction des besoins et de l'usage que l'on souhaite en faire.

Plus particulièrement l'invention se rapporte à des copolymères à blocs comprenant :

- des blocs primaires, constitués d'unités oxyméthyléniques récurrentes de formule $-(-OCH_2-)_n-$ dans laquelle n est une valeur moyenne de nombres entiers plus grands que 1 et
- des blocs secondaires constitués d'unités de formule

$$-[(-OCH_2CH_2-)_p-(-OCH_2-)_r]_{m_1}-A-[(-CH_2O)_s-(-CH_2CH_2O-)_q]_{m_2}-$$

dans laquelle p, q, r, s, $m_1$ et $m_2$ sont des valeurs moyennes de nombres entiers, identiques ou différents, dont la valeur est égale ou supérieure à 1 et dans laquelle -A- représente le résidu d'un terconstituant. Ce terconstituant peut être un composé chimique simple, un oligomère ou un polymère dont la nature chimique exacte et la taille sont choisies en fonction des propriétés de résistance à la chaleur, aux chocs ou de compatibilité avec d'autres élastomères que l'on a préétabli comme souhaitables pour les copolymères à blocs de l'invention.

En réalité les valeurs n, p, q, r, s, $m_1$ et $m_2$ sont des valeurs moyennes identiques ou différentes qui peuvent varier dans une large mesure entre les différentes molécules dont le copolymère à bloc final est constitué.

Habituellement n, r et s sont toutefois supérieurs à 20 et sont généralement supérieurs à 50. La limite supérieure de n, r et s n'est pas critique pour la présente invention et est uniquement fonction du poids moléculaire moyen en poids ($M_w$) du copolymère à bloc finalement souhaité.

Généralement les valeurs de p, q, $m_1$ et $m_2$ sont fonction de la quantité totale d'unités oxyéthyléniques et de terconstituant souhaitées, de la quantité et de la taille de résidus du terconstituant -A- que l'on souhaite présentes dans les molécules du copolymère à bloc. Habituellement ces valeurs peuvent varier, indépendamment l'une de l'autre entre 1 et 100. Généralement elles sont situées entre 1 et 20.

La nature chimique et la taille du résidu -A- , bien que critique pour les copolymères à blocs de l'invention, car définissant les propriétés exactes finales, peuvent varier entre de larges limites. Ainsi, en ce qui concerne la nature chimique de -A- on peut affirmer que celle-ci est uniquement tributaire des propriétés qu'elle est susceptible d'engendrer et de son aptitude à faire des liens chimiques avec les unités mixtes oxyéthyléniques-oxyméthyléniques. De ce fait -A- est généralement choisi parmi des composés chimiques ayant un certain nombre d'unités répétitives de type $-O(-C-)_l$ ou -O-Si- dans leur molécule et l est un nombre plus grand ou égal à 1. De bons résultats ont été obtenus avec des unités dérivés de poly-tétrahydrofuranes et de polysiloxanes. Quant à la taille des terconstituants -A-, celle-ci est uniquement tributaire des propriétés finalement souhaitées. Habituellement on opère avec des terconstituants -A- dont le poids moléculaire moyen en poids ($M_w$) varie entre 100 et 50.000. De bons résultats ont étés obtenus avec des valeurs moyennes situées entre 500 et 10.000.

La présente invention se rapporte également à un procédé permettant d'obtenir les copolymères à blocs précités.

Pour ce faire on fait :

- prépolymériser dans une première étape du 1,3-dioxolane avec un composé de formule HO-A-OH, tel que par exemple l' $\alpha,\omega$-dihydroxy- poly-tétrahydrofurane ou encore l'$\alpha,\omega$-dihydroxy-poly-diméthylsiloxane, dans des proportions préétablies de 1,3-dioxolane et de composé HO-A-OH par un procédé dans lequel on opère en présence d'un acide protonique et dont le mécanisme est connu sous le terme "activated monomer mecanism" dont le principe a été décrit par E.FRANTA et al. dans le document Macromol. Chem.,Macromol. Symp. 13/14, 127-144 (1988), ce qui permet d'obtenir des

composés de formule globale

HO--polydioxolane--polytétrahydrofurane--polydioxolane--OH,

ou

HO--polydioxolane--polysiloxane--polydioxolane--OH

et

- dans une deuxième étape on fait ensuite polymériser par voie cationique en présence de catalyseurs cationiques du trioxane en présence d'une quantité précalculée "des prépolymères" obtenus à la première étape.

La première étape du procédé de l'invention s'effectue généralement en suspension ou en solution dans des solvants organiques. Des solvants ayant donné de bons résultats pour cette étape sont les halogénoalcanes comportant de 1 à 4 atomes de carbone, tels que le chlorure de méthylène.

La première étape de la réaction est par ailleurs obligatoirement amorcée par des catalyseurs cationiques comme le $BF_3$, $AlCl_3$ ou encore du type acides protoniques comme l'acide triflique.

Enfin "les prépolymères" obtenus à la première étape peuvent être mis en oeuvre tels quels ou après isolement de leur milieu de polymérisation. Cet isolement peut se faire par toute méthode connue et appropriée à cet effet. Une méthode ayant donné de bons résultats consiste dans leur précipitation avec de l'éther diéthylique après inactivation du catalyseur avec une amine telle que la triéthylamine.

La deuxième étape du procédé de l'invention peut également être réalisée en suspension ou en solution dans des solvants organiques tels que ceux déjà décrits pour la première étape ou en état fondu. Pour cette étape le chlorure de méthylène a également donné de bons résultats.

Les catalyseurs mis en oeuvre dans la deuxième étape du procédé de l'invention sont les catalyseurs cationiques habituellement utilisés pour l'homo- ou la copolymérisation du trioxane pour autant toutefois qu'ils possèdent des propriétés de catalyseurs de transacétalisation. Un catalyseur ayant donné de bons résultats est le triflate de méthyle.

Les températures à laquelle sont réalisées les deux étapes du présent procédé sont généralement comprises entre 10 et 50 ° C. Habituellement on opère à température ambiante.

La pression sous laquelle est opéré le procédé de la présente demande n'est pas critique pour son bon déroulement. Habituellement on travaille avec des pressions comprises entre 1 et 10 ata et de préférence sous pression atmosphérique.

Les copolymères à blocs issus du présent procédé peuvent être utilisés dans toute application traditionnelle connue des polyoxyméthylènes. De préférence toutefois les copolymères à blocs de l'invention sont utilisés dans ces applications qui nécessitent des produits résistants à la chaleur, aux chocs, ou encore dans ces applications dans lesquelles une compatibilité optimale avec d'autres polymères élastomères est requise.

L'invention est illustrée par les exemples suivants.

## Exemples

Dans les exemples qui suivent :

- les amorceurs c.à.d. l'acide trifluorométhane sulfonique (acide triflique) et le triflate de méthyle sont purifiés par distillation,
- le trioxane, identifié ci-après par TXN, est purifié par recristallisation à partir d'éther diéthylique suivi par sublimation sous vide,
- le 1,3-dioxolane est identifié par DXL. Ce produit est distillé sur $CaH_2$ et séché d'avantage par passage à reflux sur un fil de sodium jusqu'à obtention d'une couleur bleue par addition d'une trace de benzophénone,
- l'$\alpha,\omega$-dihydroxy-poly-tétrahydrofurane est identifié par pTHF,
- l'$\alpha,\omega$-dihydroxy-poly-diméthylsiloxane est identifié par pDMS,
- le chlorure de méthylène est le solvant dans lequel toutes les expériences sont conduites ; ce solvant est distillé et séché sous reflux sur $CaH_2$ pendant plusieurs heures et est ensuite conservé sur alliage de Na/Pb,
- toutes les expériences sont réalisées sous atmosphère d'azote sec,
- les polymères obtenus sont précipités avec le diéthyléther et séchés sous vide,
- la structure des polymères obtenus est analysée et déterminée par 360 $^1$H-RMN.

Exemple 1

(a) Polymérisation du DXL en présence de pTHF

On fait polymériser pendant 18 heures dans un ballon en verre de 100 $cm^3$ dans du $CH_2Cl_2$ à 22 ° C :

- 4,78 $mol.l^{-1}$ de DXL = $[DXL]_o$,
- du pTHF dont le poids moléculaire moyen en nombre $M_n$ est égal à 2.000 dans des concentrations telles que :

$$[DXL]_0/[pTHF] = 20 \text{ (essai 1)}$$
$$\text{"} \quad \text{"} = 40 \text{ (essai 2)}$$
$$\text{"} \quad \text{"} = 55 \text{ (essai 3)}$$
$$\text{"} \quad \text{"} = 73 \text{ (essai 4)}$$
$$\text{"} \quad \text{"} = 100 \text{ (essai 5)} \quad \text{et}$$

- de l'acide triflique dans une concentration = [pTHF]/10 c.à.d = [fonctions OH]/5.

Après addition de triéthylamine (séché et purifié préalablement par distillation sur $CaH_2$) on précipite les polymères obtenus à -116 ° C avec de l'éther diéthylique. Les produits obtenus dans les 5 essais présentent d'après l'analyse RMN tous une structure de type

HO---polyDXL---pTHF---polyDXL---OH

Les poids moléculaires en nombre, théoriques $Mn_{théor}$.(calculé à partir de la formule :{$[DXL]_o$ - $[DXL]_e$)/-[pTHF]}. 74 dans laquelle $[DXL]_e$ = 1 $mol.l^{-1}$ ), $Mn_{RMN}$ (calculé au départ du diagramme $^1$H-RMN en formulant l'hypothèse que l'on forme des triblocs du type ABA de structure HO-pDXL-pTHF-pDXL-OH) et $Mn_{GPC}$ (déterminé par GPC avec les standards poly-THF connus) sont repris au Tableau 1 ci-après :

TABLEAU I

| [DXL]o/[pTHF] | $Mn_{théor.}$ | $Mn_{RMN}$ | $Mn_{GPC}$ |
|---|---|---|---|
| Essai 1 20 | 2800 | 2500 | 5600 |
| Essai 2 40 | 3700 | 3400 | 4700 |
| Essai 3 55 | 4800 | 4400 | 7300 |
| Essai 4 73 | 5900 | 5100 | 7400 |
| Essai 5 100 | 7400 | 8500 | 8200 |

On peut voir dans ce Tableau 1 que les valeurs expérimentales de Mn ($Mn_{GPC}$) diffèrent des valeurs calculées sur base d'un modèle tribloc de structure ABA ($Mn_{RMN}$) et qu'il existe également une différence entre la valeur théorique de Mn ($Mn_{théor}$.) et la valeur calculée à partir d'un tribloc de structure ABA ($Mn_{RMN}$).

Bien que la demanderesse ne désire pas être liée par une quelconque explication théorique de ce phénomène, une explication possible réside dans le fait d'une formation d'un certain nombre de structures cycliques dans les polymères obtenus. Un support de cette hypothèse peut être trouvé dans le fait que, si l'on remplace par exemple dans la formule permettant de calculer $Mn_{théor}$. $[DXL]_e$ par une valeur corrigée de $[DXL]_c$ = 0,8 on arrive à une concordance quasi-parfaite entre les valeurs $Mn_{théor}$ (corrigée) et $Mn_{RMN}$.

Le point de fusion des polymères obtenus, dans les essais 3 et 4 mesuré par D.S.C. (Differential Scanning Calorimetry) dans lequel les produits sont chauffés avec une vitesse de 20 ° C/min, refroidis et à nouveau chauffés, est de 40 ° C.

(b) Polymérisation de TXN en présence du polymère obtenu à l'étape (a)

Un polymère obtenu selon (a) avec un rapport initial $[DXL]_o/[pTHF]$ = 60 est dissous dans du chlorure de méthylène à 22°C à raison de 5,73 $mol.l^{-1}$ (unités de DXL présentes dans le prépolymère DXL-pTHF mis en oeuvre) et introduit dans un ballon de 100 $cm^3$.

On ajoute à cette solution du TXN de façon à obtenir un rapport de concentrations [unités de DXL présentes dans le prépolymère]/[TXN] = 1,5.

On introduit ensuite dans milieu réactionnel 0,018 mol. $l^{-1}$ du triflate de méthyle ($CF_3SO_3CH_3$).

Après 0,5 heures on inactive le catalyseur terminale par addition de triéthylamine et l'on précipite le polymère par de l'éther diéthylique à -116°C.

La structure du polymère obtenu déterminée par $^1$H-RMN est la suivante :

HO---(copoly-DXL-TXN)---pTHF---(copoly-DXL-TXN)---OH

ce qui permet de conclure à une transacétalisation des fonctions -O-$CH_2$-O-.

Exemple 2

On fait polymériser pendant 18 heures dans un ballon en verre de 100 $cm^3$ dans du $CH_2Cl_2$ à 22°C :

- 4,78 $mol.l^{-1}$ de DXL = $[DXL]_o$,
- du pDMS dont le poids moléculaire moyen en nombre $M_n$ est égal à 1.100 dans des concentration telles que :

$[DXL]_o/[pDMS]$ = 40 (essai 1)
" " = 60 (essai 2)
" " = 80 (essai 3)
" " = 100 (essai 4)
" " = 150 (essai 5) et

- de l'acide triflique dans une concentration = [pDMS]/10 c.à.d = [fonctions OH]/5

Après addition de triéthylamine (séché et purifié préalablement par distillation sur $CaH_2$) on précipite les polymères obtenus à -116°C avec de l'hexane. Les produits obtenus dans les 5 essais présentent d'après l'analyse RMN tous une structure de type

HO---polyDXL--pDMS---polyDXL---OH

Les poids moléculaires en nombre, théoriques $Mn_{théor}$.(calculé à partir de la formule : $\{([DXL]_o - [DXL]_e)/[pDMS]\}$ . 74 dans laquelle $[DXL]_e$ = 1 $mol.l^{-1}$ ) , $Mn_{RMN}$ (calculé au départ du diagramme $^1$H-RMN en formulant l'hypothèse que l'on forme des triblocs du type ABA de structure HO-pDXL-pDMS-pDXL-OH) et $Mn_{GPC}$ (déterminé par GPC avec les standards poly-THF connus) sont repris au Tableau 2 ci-après :

TABLEAU II

| [DXL]o/[pDMS] | $Mn_{théor.}$ | $Mn_{RMN}$ | $Mn_{GPC}$ |
|---|---|---|---|
| 40 | 2900 | 3400 | 1100 |
| 60 | 3800 | 6300 | 1800 |
| 80 | 4800 | 7700 | 2200 |
| 100 | 5700 | 11600 | 3200 |
| 150 | 8000 | 20900 | 5300 |

Il apparaît directement de ce tableau qu'il est difficile, voire impossible de comparer les valeurs expérimentales avec les valeurs théoriques du fait que les valeurs GPC sont déterminées avec des standards pTHF.

Enfin les écarts entre les valeurs mesurées par RMN et les valeurs théoriques sont dues à la formation d'une fraction de DMS cyclique soluble dans l'hexane.

Le point de fusion des polymères obtenus mesuré selon la méthode déjà décrite à l'exemple 1 (a) est d'environ 30 ° C.

(b) Polymérisation de TXN en présence du prépolymère obtenu à l'étape (a)

Un polymère obtenu selon 2(a) avec un rapport initial $[DXL]_o/[pDMS] = 500$ est dissous dans du chlorure de méthylène à 22 ° C à raison de 5,73 $mol.l^{-1}$ (unités de DXL présentes dans le prépolymère DXL-pDMS mis en oeuvre) et introduit dans un ballon de 100 $cm^3$.

On ajoute à cette solution du TXN de façon à obtenir un rapport de concentrations [unités de DXL présentes dans le prépolymère]/[TXN] = 1,7.

On introduit ensuite dans le milieu réactionnel 0,017 mol. $l^{-1}$ de triflate de méthyle ($CF_3SO_3CH_3$).

Après 0,5 heures on inactive le catalyseur par addition de triéthylamine et l'on précipite le polymère par de l'éther diéthylique à -116 ° C.

La structure du polymère obtenu déterminée par $^1$H-RMN est la suivante :

HO---(copoly-DXL-TXN)---pDMS---(copoly-DXL-TXN)---OH

ce qui permet à nouveau comme à l'exemple 1(b) de conclure à une transacétalisation des fonctions -O-$CH_2$-O-.

**Revendications**

**1.** Copolymères à blocs comprenant :

- des blocs primaires, constitués d'unités oxyméthylèniques récurrentes de formule $-(-OCH_2-)_n-$ dans laquelle n est une valeur moyenne de nombres entiers plus grands que 1 et
- des blocs secondaires constitués d'unités de formule

$$-[(-OCH_2CH_2-)_p-(-OCH_2-)_r]_{m_1}-A-[(-CH_2O)_s-(-CH_2CH_2O-)_q]_{m_2}$$

dans laquelle p, q, r, s, $m_1$ et $m_2$ sont des valeurs moyennes de nombres entiers, identiques ou différents, dont la valeur est égale ou supérieure à 1 et dans laquelle -A- représente le résidu d'un terconstituant.

**2.** Copolymères selon la revendication 1 dans lesquels le terconstituant -A- dérive d'un polytétrahydrofurane ou d'un polysiloxane.

**3.** Procédé de préparation de copolymères à blocs comprenant :

- des blocs primaires, constitués généralement d'unités oxyméthyléniques récurrentes de formule $-(-OCH_2-)_n-$ dans laquelle n est une valeur moyenne de nombres entiers plus grands que 1 et
- des blocs secondaires constitués d'unités de formule

$$-[(-OCH_2CH_2-)_p(-OCH_2-)_r]_{m_1}-A-[(-CH_2O)_s(-CH_2CH_2O-)_q]_{m_2}$$

dans laquelle p, q, r, s, $m_1$ et $m_2$ sont des valeurs moyennes de nombres entiers, identiques ou différents, dont la valeur est égale ou supérieure à 1 et dans laquelle -A- dérive d'un polytétrahydrofurane ou d'un polysiloxane caractérisé en ce que l'on :

- polymérise dans une première étape du 1,3-dioxolane avec un composé de formule HO-A-OH, tel que l' $\alpha,\omega$- dihydroxy-poly-tétrahydrofurane ou l'$\alpha,\omega$-dihydroxy-poly-diméthylsiloxane dans des proportions préétablies de 1,3-dioxolane et de composé HO-A-OH en présence d'un acide protonique de façon à obtenir des composés de formule globale

  HO--polydioxolane--polytétrahydrofurane--polydioxolane--OH,

  ou

  HO--polydioxolane--polysiloxane--polydioxolane--OH,

  et
- dans une deuxième étape on polymérise par voie cationique en présence de catalyseurs cationiques du trioxane en présence d'une quantité précalculée "des polymères" obtenue à la première étape.

**4.** Procédé selon la revendication 3 caractérisé en ce que le catalyseur cationique utilisé à la première étape, possède des propriétés de catalyseur de transacétalisation.

Office européen des brevets

# RAPPORT DE RECHERCHE EUROPEENNE

Numéro de la demande

**EP 91 20 2261**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | MAKROMOLEKULARE CHEMIE, MACROMOLECULAR CHEMISTRYAND PHYSICS. vol. 183, no. 6, Juin 1982, BASEL CH pages 1511 - 1522; F.KLOOS ET AL.: 'Zur Synthese und Morphologie von 1,3,5-Trioxan-Blockcopolymeren'<br>* L'article en entier * *<br>– – – | 1-4 | C 08 G 2/38<br>C 08 G 4/00<br>C 08 G 77/46 |
| D,Y | MAKROMOLEKULARE CHEMIE, MACROMOLECULAR SYMPOSIA.vol. 13/14, 1988, BASEL CH pages 127 - 144; E.FRANTA ET AL.: 'Chain extension of oligodiols by means of cyclic acetals'<br>* page 127 - page 137 * *<br>– – – | 1-4 | |
| A | FR-A-1 579 410 (CELANESE CORP.)<br>* page 4, ligne 15 - ligne 21 * * * page 5, ligne 26 - ligne 36 * * * page 6, ligne 7 - ligne 19; revendications * *<br>– – – – – | 1 | |

| DOMAINES TECHNIQUES RECHERCHES (Int. Cl.5) |
|---|
| C 08 G |

Le présent rapport de recherche a été établi pour toutes les revendications

| Lieu de la recherche | Date d'achèvement de la recherche | Examinateur |
|---|---|---|
| La Haye | 03 décembre 91 | WEIS R.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

&: membre de la même famille, document correspondant